# EUROPÄISCHE PATENTSCHRIFT

(11) **EP 0 973 317 B1**
(45) Veröffentlichungstag und Bekanntmachung des Hinweises auf die Patenterteilung: **03.02.2010**
(21) Anmeldenummer: 99110746.7
(22) Anmeldetag: 04.06.1999
(51) Int. Cl.: H04M 11/08, H04M 11/04, G06Q 10/00

(54) **Verfahren und Festnetz zur Übertragung von Informationen zwischen einer zentralen Netzeinrichtung und einer Informationsquelle**
Method and fixed network for transmission of information between a central network device and an information source
Procédé et réseau fixe pour la transmission d'informations entre un dispositif central de réseau et une source d'information

(30) Priorität: 11.07.1998 DE 19831170
(43) Veröffentlichungstag der Anmeldung: 19.01.2000
(73) Patentinhaber: Deutsche Telekom AG, 53113 Bonn (DE)
(72) Erfinder: Hertzel, Silvio, 53639 Königswinter (DE); Wagner, Robert, 53343 Wachtberg (DE); Perini, Roland, 53424 Remagen (DE)

(56) Entgegenhaltungen:
- WO-A-98/30011
- US-A- 5 267 148

## Beschreibung

Die Erfindung betrifft ein Verfahren zum Übertragen von Informationen über ein Kommunikationsnetz mit mehreren teilnehmerseitig angeschalteten Endeinrichtungen, wenigstens einer zentralen Netzeinrichtung und mit mehreren mit der Netzeinrichtung verbindbaren Informationsquellen gemäß Anspruch 1 sowie ein Festnetz gemäß Anspruch 13 zur Durchführung des Verfahrens.

Die Erfindung geht von dem allgemeinen Umstand aus, daß die einen Kunden betreffenden Änderungen diesem nicht sofort oder sogar überhaupt nicht mitgeteilt werden, wenn sich der Kunde nicht selbst darum kümmert. Ein Beispiel hierfür sind sich ändernde Kontostände eines Kunden, die ihm gewöhnlich monatlich in Form von Kontoauszügen per Post von der Bank zugestellt werden. Alternativ kann der Kunde selbst mit Hilfe einer Chip-Karte an einem entsprechenden Bankautomaten zu jeder Zeit seinen Kontostand abfragen. Eine andere Möglichkeit besteht darin, beispielsweise beim Home-Banking über T-Online oder das Internet die Kontostände abzurufen. In all diesen Fällen wird der Kunde jedoch nicht unmittelbar über einen geänderten Kontostand informiert.
Ferner ist es bekannt, daß ein Kunde auf externe Informationsquellen (Datenbanken) in einem Kommunikationsnetz nur zugreifen kann, wenn er diese direkt anwählt.

Aus US 5, 267, 184 ist ein Verfahren bekannt wobei die unterschiedliche Informationsquellen selbst einselne Verbindungen zu den Teilnehmer aufbauen. Der Erfindung liegt daher die Aufgabe zugrunde, ein Verfahren und ein Festnetz bereitszustellen, das einem Teilnehmer auf einfache und bequeme Weise Informationen von unterschiedlichen Informationsquellen übermitteln und für ihn einfache Entscheidungen treffen kann.

Dieses Problem löst die Erfindung zum einen mit den Verfahrensschritten des Anspruchs 1.

Das Verfahren ist in einem Festnetz anwendbar, um Informationen wenigstens teilweise über das Festnetz zu übertragen, das mehrere teilnehmerseitig angeschaltete Endeinrichtungen, wenigstens eine zentrale Netzeinrichtung und mehrere mit der Netzeinrichtung verbindbare Informationsquellen aufweist. Bereits an dieser Stelle sei erwähnt, daß es sich bei der Netzeinrichtung um einen Rechner, einen sogenannten Ereignis-Server handelt, und als Informationsquellen beispielsweise Bankrechner, beim Teilnehmer installierte Feuer-,Rauch-, Wasser-Meldeeinrichtungen, Datenbanken, die den aktuellen Wetterbericht speichern und dergleichen zum Einsatz kommen.

Zunächst wird eine Verbindung zwischen der Netzeinrichtung und wenigstens einer vorbestimmten Informationsquelle aufgebaut. Die Informationsquelle überträgt danach die gewünschte Information zur Netzeinrichtung, die unter Ansprechen auf diese Information einen vorbestimmten Vorgang auslöst.

Vorteilhafte Weiterbildungen des Verfahrens sind Gegenstand der Unteransprüche 2 bis 12.

Damit einem Kunden beispielsweise sich ändernde Zustände sofort mitgeteilt werden können, wie z.B. eine Änderung des Kontostandes, leitet die entsprechende Informationsquelle einen Verbindungsaufbau unter Ansprechen auf dieses bestimmte Ereignis ein und überträgt automatisch oder unter Aufforderung der Netzeinrichtung die entsprechende Information zur Netzeinrichtung.

Gemäß einer vorteilhaften Weiterbildung leitet die Netzeinrichtung anschließend einen Verbindungsaufbau zu wenigstens einer vorbestimmten Endeinrichtung auf und überträgt die für diese Endeinrichtung bestimmte Information dorthin. Die Endeinrichtung kann an das Festnetz angeschaltet oder zu einem anderen Kommunikationsnetz, insbesondere ein Mobilfunknetz, gehören. Dann kann es sich bei der Endeinrichtung beispielsweis um ein Hany oder einen Pager handeln.

Um das Verfahren weiter zu automatisieren, kann die Netzeinrichtung unter Ansprechen auf ein vorbestimmtes Ereignis selbst einen Verbindungsaufbau zu wenigstens einer Informationsquelle einleiten und von dort eine vorbestimmte Information abfragen. Bei diesem Ereignis kann es sich um eine vorbestimmte Uhrzeit und/oder ein vorbestimmtes Datum handeln, zu dem der Informationszustand einer oder mehrerer vorbestimmter Informationsquellen von der Netzeinrichtung abgefragt wird. Die abgefragten Informationen werden vorzugsweise zwischengespeichert und anschließend zu den entsprechenden Endeinrichtungen weitergeleitet.

Durch die Übermittlung eines Informationswunsches oder Teilnehmer-spezifischer Daten zur Netzeinrichtung, die der Kunde an seiner Endeinrichtung selbst eingeben kann, kann dieser direkten Einfluß auf die Netzeinrichtung und deren Arbeitsweise nehmen. In der Netzeinrichtung werden nur die Teilnehmer-spezifischen Daten der Teilnehmer gespeichert, die über eine Zugangsberechtigung zur Netzeinrichtung verfügen.

Die Netzeinrichtung leitet entsprechend dem ausgewerteten Informationswunsch des Kunden einen Verbindungsaufbau zu der der jeweiligen Informationsquelle ein, fragt die entsprechende Information ab und leitet diese zu einer auswählbaren Endeinrichtung des Kunden weiter.

Gemäß einem weiteren Ausführungsbeispiel kann die Netzeinrichtung unter Ansprechen auf ein von einer Informationsquelle kommendes Steuersignal einen Verbindungsaufbau zu anderen Informationsquellen einleiten und dort die gewünschten Informationen abfragen und zu den jeweiligen Endeinrichtungen weiterleiten.

Eine transparente Informationsübertragung von der Netzeinrichtung zu einer bestimmten Endeinrichtung wird dadurch erreicht, daß die Netzeinrichtung die zu übertragende Information in ein von der bestimmten Endeinrichtung verarbeitbares Format umsetzt. Dadurch ist es beispielsweise möglich, eine Information gleichzeitig sowohl über einen Fernsprechapparat als auch über ein Telefax-Gerät auszugeben.

Das Verfahren kann vorteilhafterweise dahingehend weiterentwickelt werden, daß die Netzeinrichtung einem Kunden einfache Entscheidungen abnehmen kann.
Dazu werden zu vorbestimmten, von den Informationsquellen zur Verfügung gestellten Informationen vorbestimmte Schwellenwerte, die der Kunde vorgeben kann, in der Netzeinrichtung gespeichert. Wenigstens eine durch die Netzeinrichtung angeforderte Information einer vorbestimmten Informationsquelle wird dann mit dem dazugehörenden Schwellenwert verglichen. Ein Über- oder Unterschreiten jedes Schwellenwertes löst dann einen vorbestimmten Vorgang aus. Die Netzeinrichtung kann auf diese Weise für einen Kunden feststellen, ob ein Auftrag zum Kauf oder Verkauf von Aktien erteilt werden soll.

Damit die Netzeinrichtung nur auf Informationsquellen zugreifen kann, zu denen der jeweilige Kunde eine Zugangsberechtigung besitzt, und um die Netzeinrichtung vor einem unberechtigten Zugriff einer nichtberechtigten Person zu schützen, wird zwischen der Netzeinrichtung und jeder damit verbundenen Informationsquelle sowie zwischen der Netzeinrichtung und jeder damit verbundenen Endeinrichtung eine gegenseitige Authentifizierung durchgeführt.

Die Datensicherheit wird dadurch gewährleistet, daß die auszutauschenden Informationen verschlüsselt zwischen der Netzeinrichtung und den Informationsquellen sowie zwischen der Netzeinrichtung und den Endeinrichtungen übertragen werden.

Um bei einem digitalen Festnetz Kanalkapazität einsparen zu können, werden kurze Informationen, das sind Informationen, die mit einer geringen Bit-Rate übertragen werden können, über den Steuerkanal des Festnetzes übertragen.

Ein Festnetz zur Durchführung des Verfahrens ist Gegenstand des Anspruchs 13.

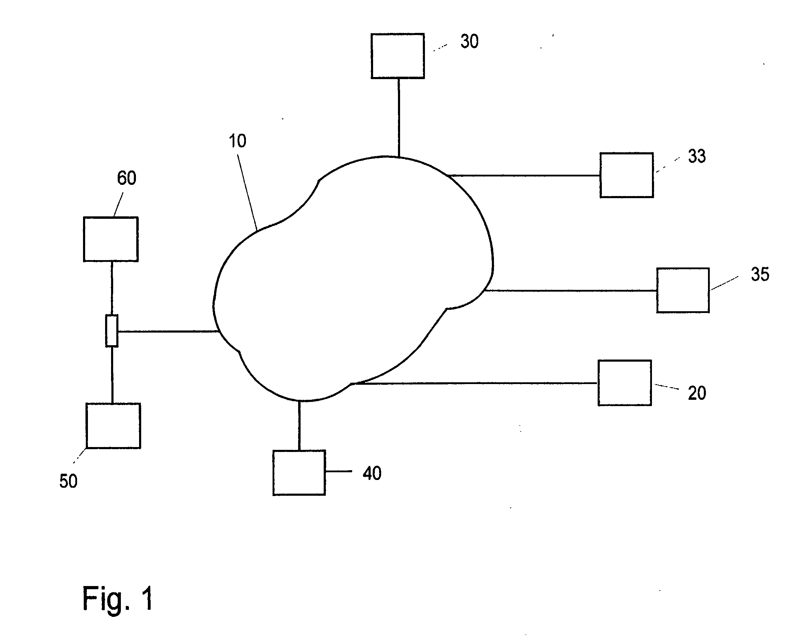

Die Erfindung wird nachfolgend anhand mehrerer Ausführungsbeispiele in Verbindung mit der beiliegenden Zeichnung näher erläutert.

In der Figur ist beispielhaft ein digitales ISDN-Netz 10 dargestellt, in dem eine zentrale Netzeinrichtung, nachfolgend Ereignis-Server 20 implementiert ist. Der Ereignis-Server 20, dessen Funktion nachfolgend ausführlicher beschrieben wird, ist über das ISDN-Netz 10 mit beispielsweise drei Informationsquellen 30, 33 und 35 verbindbar. Bei der Informationsquelle 30 handelt es sich beispielsweise um einen Rechner einer Bank A, bei der der Kunde A sein Bankkonto führt. Die Informationsquelle 33 sei ebenfalls ein Rechner, allerdings bei einer anderen Bank B, bei der der Kunde A ein Aktiendepot besitzt. Die Informationsquelle 35 ist beispielsweise eine Feuer-, Rauch-und Wasser-Meldeeinrichtung, die in den Räumen eines Kunden B installiert und über eine ISDN-Anschlußeinrichtung an das ISDN-Netz 10 angeschaltet ist.
Der Ereignis-Server 20 ist über das ISDN-Netz 10 ebenfalls mit einer zentralen Überwachungseinrichtung 40 verbindbar, die beispielsweise in einer Feuerwehrstation aufgestellt ist. Lediglich der einfacheren Darstellung wegen sind nur die beiden Endeinrichtungen 50 und 60 gezeigt, die an eine ISDN-Anschlußeinheit des Kunden A angeschaltet sind. Die Endeinrichtung 50 sei beispielsweise ein Telefon, wohingegen die Endeinrichtung 60 eine Telefax-Gerät darstellt.

Der Ereignis-Server 20 enthält eine erste Speichereinrichtung, in der die von den Informationsquellen 30, 32 und 35 gelieferten Informationen abgelegt werden können. Eine vom Kunden A programmierbare Steuereinrichtung leitet unter Ansprechen auf ein vorbestimmtes Ereignis (Beispiele für ein solches Ereignis folgen weiter unten) einen Verbindungsaufbau wenigstens zu einer Informationsquelle 30, 33 und 35 und/oder zu wenigstens einer der Endeinrichtungen 50, 60 des ISDN-Netzes 10 oder zu einer Endeinrichtung eines anderen Kommunikationsnetzes ein. Ferner ist eine Einrichtung zum Empfangen einer Information von den Informationsquellen 30, 33 und 35 sowie eine Einrichtung zum Umsetzen der zum Telefon 50 und/oder zum Telefaxgerät 60 zu übertragenden Information in jeweils ein Format vorgesehen, das das Telefon 50 bzw. das Telefaxgerät 60 verarbeiten kann. Der Ereignisserver 20 weist ferner eine zweite Speichereinrichtung zum Speichern von Schwellenwerten auf, die bestimmten, von den Informationsquellen 30, 33 und 35 bereitgestellten Informationen zugeordnet sind. Ein Komparator in dem Ereignisserver 20 dient dazu, die von einer Informationsquelle 30, 33 und/oder 35 erhaltene Information mit dem dazugehörenden Schwellenwert zu vergleichen. Die Steuereinrichtung ist wiederum derart ausgeblidet, daß sie unter Ansprechen auf das Ausgangssignal des Komparators einen vorbestimmten Vorgang auslöst. Ein konkretes Beispiel wird hierfür weiter unten geschildert.

Wir betrachten nunmehr ein erstes Szenario, bei dem eine Änderung des Kontostandes dem Kunden A mitgeteilt und angezeigt werden soll. Zunächst sei angenommen, daß alle teilnehmerspezifischen Informationen über den Kunden A in dem Ereignis-Server 20 abgespeichert worden sind. Das Eingeben der teilnehmerspezifischen Informationen kann der Kunde A, beispielsweise über sein Telefon 50 mittels Sprachsteuerung selbst eingeben, oder aber die teilnehmerspezifischen Informationen werden von einer zentralen Stelle aus in den Ereignis-Server 20 eingelesen. Die teilnehmerspezifische Information enthält beispielsweise den Namen des Kunden A, dessen Rufnummer, dessen Adresse, dessen persönliche Identifikationsnummer (PIN), Angaben darüber, an welches Endgerät -Telefon 50 und/oder Telefaxgerät 60- welche Information übermittelt werden soll, sowie Angaben darüber, auf welche Informationsquellen 30, 33 und 35 der Kunde A zugreifen darf. Darüberhinaus kann der Kunde A bestimmte Grenzwerte zu seinem Konto sowie bestimmte Grenzwerte betreffend seine Aktien, beispielsweise einen vorbestimmten Aktienkurs eingeben. Wie weiter unten noch ausführlicher beschrieben wird, ist der Ereignis-Server 20 in der Lage, mittels dieser vorgegebenen Grenzwerte selbständig Entscheidungen für den Kunden A zu treffen und vorbestimmte Aktionen auszulösen.

Wir nehmen nun an, daß sich der Kontostand des Kunden A geändert hat. Daraufhin baut der Bankrechner 30 eine Verbindung zum Ereignis-Server 20 auf und teilt diesem den geänderten Kontozustand des Kunden A mit, der im ersten Speicher des Ereignis-Servers 20 abgelegt wird. Die Adresse und/oder Rufnummer des Kunden A wird ebenfalls zum Ereignis-Server 20 übermittelt und abgespeichert. Daraufhin leitet die Steuereinrichtung des Ereignis-Servers 20 einen Verbindungsaufbau unter Einschluß von einer oder mehreren Vermittlungsstellen des ISDN-Netzes 10 zu dem Teilnehmeranschluß des Kunden A ein. Es sei ferner angenommen, daß in dem Ereignis-Server 20 die Information für den Kunden A abgelegt ist, daß Kontozustände nur über das Telefax-Gerät 60 auszugeben sind. Die zu übertragenden Kontostände werden deshalb in der Umsetzeinrichtung des Ereignis-Servers 20 in ein Format transformiert, das von dem Telefax-Gerät 60 verarbeitet werden kann. Anschließend wird der neue Kontozustand über die hergestellte Verbindung zum Telefax-Gerät 60 übermittelt und dort ausgedruckt. An dieser Stelle sei angemerkt, daß als Endeinrichtung auch ein mobiles Gerät zum Einsatz kommen kann, wobei dann sich die Übertragungsstrecke zwischen dem Ereignis-Server 20 und dem mobilen Gerät teilweise über das Festnetz 10 und zum Teil über ein Mobilfunknetz erstreckt. Der Kontostand kann, da es sich um eine kurze Information handelt, über den D-Kanal des ISDN-Netzes 10 übertragen werden.

Wir betrachten nunmehr ein zweites Szenario, bei dem zunächst wie beim ersten Szenario unter Ansprechen auf ein vorbestimmtes Ereignis eine der Informationsquellen 30, 33, 35 einen Verbindungsaufbau zum Ereignis-Server 20 einleitet.

Es sei zunächst angenommen, daß der Kunde A bei der Bank B, der der Bankrechner 33 zugeordnet ist, über ein Aktiendepot verfügt. Darüber hinaus hat der Kunde A den Ereignis-Server 20 derart programmiert, daß neue Aktien gekauft werden sollen, wenn der Aktienkurs unter DM 30,00 pro Aktie fällt und sein Kontostand über DM 5.000,00 liegt. Ferner sei angenommen, daß der gesamte Geldbetrag in Aktien angelegt werden soll. Diese Daten gibt der Kunde A beispielsweise über sein Telefon 50 über eine Spracheingabe oder durch ein Betätigen der entsprechenden Tasten ein. Diese Daten werden dann als Schwellenwerte und bedingte Befehle in dem zweiten Speicher des Ereignis-Servers 20 abgelegt. Zu einem bestimmten Zeitpunkt, beispielsweise wenn sich der Aktienkurs ändert, leitet der Bankrechner 33 einen Verbindungsaufbau zum Ereignis-Server 20 ein und überträgt den aktuellen Aktienkurs. Daraufhin vergleicht der Komparator des Ereignis-Servers 20 den erhaltenen aktuellen Aktienkurs mit dem abgespeicherten Aktienkurs. Der Ereignis-Server 20 stellt dabei fest, daß der Aktienkurs auf DM 20,00 pro Aktie, d.h. unter den vom Kunden A eingestellten Schwellenwert gefallen ist. Unter Ansprechen auf dieses Ergebnis leitet der Ereignis-Server 20 einen Verindungsaufbau zum Bankrechner 30 ein, um dort den aktuellen Kontostand des Kunden A abzufragen. Damit sichergestellt ist, daß der Ereignis-Server 20 berechtigt ist, Informationen über den Kunden A über die Bankrechner 30 und 33 einzuholen, findet eine gegenseitige Authentifizierung zwischen den Bankrechnern 30 und 33 und dem Ereignis-Server 20 statt, was an sich bekannt ist. Da die teilnehmerspezifischen Daten des Kunde A im Ereignis-Server 20 abgelegt sind, die auch eine Zugangsberechtigung des Kunden A zum Bankrechner 30 oder 33 enthalten, verläuft die Authentifizierung zwischen dem Ereignis-Server 20 und dem Bankrechner 30 erfolgreich. Daraufhin überträgt der Bankrechner 30 den aktuellen Kontostand vorzugsweise in verschlüsselter Form zum Ereignis-Server 20. Der Komparator des Ereignis-Servers 20 stellt fest, daß der aktuelle Kontozustand des Kunden A DM 10.000,00 beträgt, d. h.über dem eingegeben Grenzwert von DM 5000 liegt. Die Steuereinrichtung des Ereignis-Servers 20 sorgt nunmehr dafür, daß ein entsprechender Befehl zum Aktienkauf erzeugt wird. Da der Kunde für den gesamten Betrag Aktien kaufen möchte, erzeugt der Ereignis-Server 20 einen Auftragsbefehl "Bitte 500 Aktien zu DM 20/Aktie kaufen", den er beispielsweise zum Bankrechner 33 übermittelt. Die dazugehörende Bank veranlaßt nunmehr den Kauf der gewünschten 500 Aktien zu einem Aktienkurs von DM 20,00 pro Aktie.

Wir betrachten nunmehr ein drittes Szenario, bei dem der Ereignis-Server 20 unter Ansprechen auf ein vorbestimmtes Ereignis eine Verbindung zu dem Bankrechner 30 des Kunden A einleitet. Dieses, einen Verbindungsaufbau einleitende Ereignis besteht beispielsweise in einer Uhrzeit und in einem Datum, zu dem der Kontostand des Kunden A abgefragt werden soll. Beispielsweise soll an jedem Montag um 18.oo Uhr der Kontostand des Kunden A abgefragt werden. Dies bedeutet, daß an jedem Montag um 18.oo Uhr der Ereignis-Server 20 einen Verbindungsaufbau zum Bankrechner 30 einleitet und den Kontozustand des Kunden A abfragt. Wiederum sei angenommen, daß der Kunde zuvor den Ereignis-Server 20 derart programmiert hat, daß sein Kontozustand immer über das Telefax-Gerät 60 ausgegeben wird. Demzufolge leitet der Ereignis-Server 20 einen Verbindungsaufbau zum Teilnehmeranschluß des Kunden A ein und übermittelt den aktuellen Kontozustand zum Telefax-Gerät 60.

Ein weiteres Ereignis, das den Ereignis-Server 20 veranlassen kann, einen Verbindungsaufbau zu einer vorbestimmten Informationsquelle einzuleiten, besteht darin, daß der Kunde A über sein Telefon 50 den Ereignis-Server 20 unmittelbar veranlaßt, eine vorbestimmte Information abzufragen und an ihn weiterzuleiten.

Ein weiteres Ereignis, das den Ereignis-Server 20 veranlaßt, eine vorbestimmte Aktion vorzunehmen, wird im folgenden vierten Szenario geschildert. Wie der Figur zu entnehmen ist, handelt es sich bei der Informationsquelle 35 um eine Sensoreinrichtung, die in einer Wohnung eines Kunden B installiert ist. Die Sensoreinrichtung 35 kann beispielsweise Feuer, Rauch oder auch einen zu hohen Wasserpegel detektieren.
Es sei angenommen, daß der Kunde B sich nicht in seiner Wohnung befindet. Der Sensor 35 detektiert eine Rauchentwicklung und leitet, aktiviert durch dieses Ereignis, einen Verbindungsaufbau zum Ereignis-Server 20 über das ISDN-Netz 10 ein und sendet die Meldung "Feueralarm beim Kunden B" zum Ereignis-Server 20. Entsprechend seines Programmierzustandes leitet der Ereignis-Server 20 einen Verbindungsaufbau zu dem bei der Feuerwehr installierten Zentralrechner 40 ein und übermittelt die Nachricht "Feueralarm beim Kunden B" zum Zentralrechner 40.

Obwohl hier nur ein kleiner Ausschnitt von möglichen Ereignissen geschildert worden ist, die eine vorbestimmte Informationsquelle und/oder den Ereignis-Server 20 veranlassen, einen Verbindungsaufbau zu einer vorbestimmten Informationsquelle oder einer vorbestimmten Endeinrichtung einzuleiten, sind viele weitere Ereignisse denkbar, die für den Fachmann naheliegend sind und unter den Schutzbereich der Ansprüche 1 und 13 fallen.

Dank der Erfindung ist es möglich, einem Kunden den Zugriff auf verschiedene Informationsquellen über eine zentrale Einrichtung zu ermöglichen, ohne daß dieser sich die Rufnummern der einzelnen Informationsquellen oder die Zuordnung einer Information zu einer vorbestimmten Informationsquelle merken muß. Außerdem kann der Kunde auf einfache Art und Weise dem Ereignis-Server 20 mitteilen, an welche Endeinrichtungen eine enstprechende Information weitergeleitet werden soll.

## Patentansprüche

1. Verfahren zum Übertragen von Informationen wenigstens teilweise über ein Festnetz (10) mit mehreren teilnehmerseitig angeschalteten Endeinrichtungen (50, 60), wenigstens einer zentralen Netzeinrichtung (20) und mit mehreren mit der zentralen Netzeinrichtung (20) verbindbaren Informationsquellen (30, 33, 35), mit folgenden Verfahrensschritten:
a) Aufbauen einer Verbindung zwischen der Netzeinrichtung (20) und wenigstens einer vorbestimmten Informationsquelle (30, 33, 35);
b) Übertragen einer vorbestimmten Information von der Informationsquelle (30, 33, 35) zur Netzeinrichtung (20); und
c) unter Ansprechen auf die empfangene Information **baut** die Netzeinrichtung (20) **eine Verbindung zu wenigstens einer vorbestimmten Endeinrichtung (50, 60) des Festnetzes (10) oder eines anderen Kommunikationsnetzes auf und leitet die empfangene Information dorthin weiter.**

2. Verfahren nach Anspruch 1, **dadurch gekennzeichnet, daß** der Verbindungsaufbau in Schritt a) von der vorbestimmten Informationsquelle (30, 33, 35) unter Ansprechen auf ein vorbestimmtes Ereignis eingeleitet wird.

3. Verfahren nach Anspruch 1, **dadurch gekennzeichnet, daß** der Verbindungsaufbau zu wenigstens einer Informationsquelle (30, 33, 35) in Schritt a) von der Netzeinrichtung (20) unter Ansprechen auf ein vorbestimmtes Ereignis eingeleitet wird.

4. Verfahren nach Anspruch 3, **dadurch gekennzeichnet, daß** das den Verbindungsaufbau **in Schritt a)** einleitende Ereignis eine vorbestimmte Uhrzeit und/oder ein vorbestimmtes Datum ist.

5. Verfahren nach Anspruch 3, **dadurch gekennzeichnet, daß** das den Verbindungsaufbau **in Schritt a)** einleitende Ereignis ein von einer Endeinrichtung (50) oder einer Informationsquelle (30, 33, 35) zur Netzeinrichtung (20) übertragenes Informationsanforderungs-Signal ist.

6. Verfahren nach Anspruch **5**, **dadurch gekennzeichnet, daß** die Netzeinrichtung (20) die zu übertragende Information in ein von der Endeinrichtung (50, 60) verarbeitbares Format umsetzt.

7. Verfahren nach einem der Ansprüche 1 bis **6**, **dadurch gekennzeichnet, daß** für vorbestimmte, von den Informationsquellen (30, 33, 35) zur Verfügung gestellten Informationen in der Netzeinrichtung (20) Schwellenwerte gespeichert werden, daß wenigstens eine vorbestimmte, in der Netzeinrichtung (20) empfangene Information mit dem dazugehörenden Schwellenwert verglichen wird, und daß bei Über- oder Unterschreiten jedes Schwellenwertes ein vorbestimmter Vorgang von der Netzeinrichtung (20) ausgelöst wird.

8. Verfahren nach einem der Ansprüche 1 bis **7**, **dadurch gekennzeichnet, daß** zwischen der Netzeinrichtung (20) und jeder damit verbundenen Informationsquelle (30, 33, 35) sowie zwischen der Netzeinrichtung (20) und jeder damit verbundenen Endeinrichtung (50, 60) eine gegenseitige Authenifizierung durchgeführt wird.

9. Verfahren nach einem der Ansprüche 1 bis **8**, **dadurch gekennzeichnet, daß** die zwischen der Netzeinrichtung (20) und den Informationsquellen (30, 33, 35) sowie zwischen der Netzeinrichtung (20) und den Endeinrichtungen (50, 60) ausgetauschte Informationen verschlüsselt übertragen werden.

10. Verfahren nach einem der Ansprüche 1 bis **9**, **dadurch gekennzeichnet, daß** das Festnetz (10) ein digitales Netz ist, und kurze Informationen über einen Steuerkanal zwischen der Netzeinrichtung (20) und den Informationsquellen (30, 33, 35) sowie zwischen der Netzeinrichtung (20) und den Endeinrichtungen (50, 60) übertragen werden.

11. Verfahren nach einem der Ansprüche 1 bis **10**, **dadurch gekennzeichnet, daß** in der Netzeinrichtung (20) alle Teilnehmer-spezifischen Informationen der Teilnehmer, die über eine Zugangsberechtigung zur Netzeinrichtung (20) verfügen, gespeichert sind, und daß die Netzeinrichtung (20) Teilnehmer-individuell programmiert werden kann.

12. Festnetz zur Durchführung des Verfahrens nach einem der Ansprüche 1 bis **11** mit folgenden Merkmalen:
- mehrere, teilnehmerseitig angeschaltete Endeinrichtungen (50, 60),
- wenigstens eine zentrale Netzeinrichtung (20) und
- mehrere mit der zentralen Netzeinrichtung (20) verbindbare, vorbestimmte Informationen bereitstellende Informationsquellen (30, 33, 35),
wobei die zentrale Netzeinrichtung (20) folgende Merkmale aufweist:
a) eine erste Speichereinrichtung zum Speichern der von den Informationsquellen übertragenen Informationen,
b) eine programmierbare Steuereinrichtung zum Einleiten **eines Verbindungsaufbaus** unter Ansprechen auf ein vorbestimmtes Ereignis wenigstens zu einer Informationsquelle (30, 33, 35) und **zum Einleiten eines Verbindungsaufbaus unter Ansprechen auf** die von den Informationsquellen übertragene Information zu wenigstens einer Endeinrichtung (50, 60) des Festnetzes (10) oder eines anderen Kommunikationsnetzes,
c) eine Einrichtung zum Empfangen einer vorbestimmten Information von der Informationsquelle (30, 33, 35),
d) eine Einrichtung zum Umsetzen der zur wenigstens einen Endeinrichtung (50, 60) zu übertragenden Information in ein von der Endeinrichtung verarbeitbares Format, und
e) eine Einrichtung zum Übertragen der empfangenen Information zu der wenigstens einen Endeinrichtung (50, 60).

13. Festnetz nach Anspruch **12**, **dadurch gekennzeichnet, daß**
die Netzeinrichtung (20) weiter aufweist:
f) eine zweite Speichereinrichtung zum Speichern von vorbestimmten Informationen zugeordneten Schwellenwerten,
g) eine Einrichtung zum Vergleichen der von einer Informationsquelle (30, 33, 35) erhaltenen vorbestimmten Information mit dem dazugehörenden Schwellenwert,
wobei die Steuereinrichtung unter Ansprechen auf das Ergebnis der Vergleichseinrichtung einen vorbestimmten Vorgang auslöst.

## Claims

1. Method for transmitting information at least partially over a fixed-line network (10) having multiple terminals (50, 60) connected on the subscriber side, having at least one central network device (20), and having multiple information sources (30, 33, 35) that can be connected to the central network device (20), with the following method steps:
a) setup of a connection between the network device (20) and at least one predetermined information source (30, 33, 35);
b) transmission of a predetermined information item from the information source (30, 33, 35) to the network device (20); and
c) in response to the received information, the network device (20) sets up a connection to at least one predetermined terminal (50, 60) of the fixed-line network (10) or of another communication network, and routes the received information thereto.

2. Method according to claim 1, **characterized in that** the connection setup in step a) is initiated by the predetermined information source (30, 33, 35) in response to a predetermined event.

3. Method according to claim 1, **characterized in that** the connection setup to at least one information source (30, 33, 35) in step a) is initiated by the network device (20) in response to a predetermined event.

4. Method according to claim 3, **characterized in that** the event initiating the connection setup in step a) is a predetermined time and/or a predetermined date.

5. Method according to claim 3, **characterized in that** the event initiating the connection setup in step a) is an information request signal transmitted to the network device (20) by a terminal (50) or by an information source (30, 33, 35).

6. Method according to claim 5, **characterized in that** the network device (20) converts the information to be transmitted into a format that can be processed by the terminal (50, 60).

7. Method according to any one of claims 1 through 6, **characterized in that** threshold values are stored in the network device (20) for predetermined information items made available by the information sources (30, 33, 35), **in that** at least one predetermined information item received in the network device (20) is compared with the associated threshold value, and **in that** a predetermined process is initiated by the network device (20) if each threshold value is exceeded in a positive or negative direction.

8. Method according to any one of claims 1 through 7, **characterized in that** mutual authentication is carried out between the network device (20) and each information source (30, 33, 35) connected thereto, as well as between the network device (20) and each terminal (50, 60) connected thereto.

9. Method according to any one of claims 1 through 8, **characterized in that** the information items exchanged between the network device (20) and the information sources (30, 33, 35), and between the network device (20) and the terminals (50, 60), are transmitted in encrypted form.

10. Method according to any one of claims 1 through 9, **characterized in that** the fixed-line network (10) is a digital network, and short information items are transmitted over a control channel between the network device (20) and the information sources (30, 33, 35), as well as between the network device (20) and the terminals (50, 60).

11. Method according to any one of claims 1 through 10, **characterized in that** all subscriber-specific information of the subscribers who have access authorization to the network device (20) is stored in the network device (20), and **in that** the network device (20) can be programmed on an individual-subscriber basis.

12. Fixed-line network for carrying out the method according to any one of claims 1 through 11, having the following features
- multiple terminals (50, 60) connected on the subscriber side,
- at least one central network device (20), and
- multiple information sources (30, 33, 35) that can be connected to the central network device (20) and that provide predetermined information items,
wherein the central network device (20) has the following features:
a) a first storage device for storing the information transmitted by the information sources,
b) a programmable control unit for initiating **a connection setup** to at least one information source (30, 33, 35) in response to a predetermined event and **for initiating a connection setup** to at least one terminal (50, 60) of the fixed-line network (10) or another communications network **in response** to the information transmitted by the information sources,
c) a device for receiving a predetermined information item from the information source (30, 33, 35),
d) a device for converting the information to be transmitted to at least one terminal (50, 60) into a format that can be processed by the terminal, and
e) a device for transmitting the received information to the at least one terminal (50, 60).

13. Fixed-line network according to claim 12, **characterized in that** the network device (20) additionally has:
f) a second storage device for storing threshold values associated with predetermined information items,
g) a device for comparing the predetermined information received from an information source (30, 33, 35) with the associated threshold value,
wherein the control unit initiates a predetermined process in response to the result from the comparison device.

## Revendications

1. Procédé de transmission d'informations au moins partielle par l'intermédiaire d'un réseau fixe (10) comportant plusieurs terminaux (50, 60) connectés côté abonné, au moins un équipement réseau central (20) et plusieurs sources d'information (30, 33, 35) aptes à être connectées à l'équipement réseau central (20), comprenant les étapes de procédé suivantes :
a) établissement d'une connexion entre l'équipement réseau (20) et au moins une source d'information prédéterminée (30, 33, 35) ;
b) transmission d'une information prédéterminée de la source d'information (30, 33, 35) vers l'équipement réseau (20) ; et
c) en réponse à l'information reçue, l'équipement réseau (20) établit une connexion vers au moins un terminal (50, 60) prédéterminé du réseau fixe (10) ou d'un autre réseau de communication et transfère l'information reçue à ce dernier.

2. Procédé selon la revendication 1, **caractérisé en ce qu'**à l'étape a), l'établissement de connexion est déclenché par la source d'information prédéterminée (30, 33, 35) en réponse à un événement prédéterminé.

3. Procédé selon la revendication 1, **caractérisé en ce que** l'établissement de connexion vers au moins une source d'information (30, 33, 35) est déclenché, à l'étape a), par l'équipement réseau (20) en réponse à un événement prédéterminé.

4. Procédé selon la revendication 3, **caractérisé en ce que** l'événement déclenchant l'établissement de connexion à l'étape a) est une heure prédéterminée et/ou une date prédéterminée.

5. Procédé selon la revendication 3, **caractérisé en ce que** l'événement déclenchant l'établissement de connexion à l'étape a) est un signal de demande d'information transmis depuis un terminal (50) ou une source d'information (30, 33, 35) vers l'équipement réseau (20).

6. Procédé selon la revendication 5, **caractérisé en ce que** l'équipement réseau (20) convertit l'information à transmettre en un format apte à être traité par le terminal (50, 60).

7. Procédé selon l'une des revendications 1 à 6, **caractérisé en ce que** des valeurs seuils sont enregistrées dans l'équipement réseau (20) pour des informations prédéterminées fournies par les sources d'information (30, 33, 35), **en ce qu'**au moins une information prédéterminée reçue dans l'équipement réseau (20) est comparée avec la valeur seuil correspondante, et **en ce qu'**en cas de dépassement vers le haut ou vers le bas de chaque valeur seuil, une procédure prédéterminée est déclenchée par l'équipement réseau (20).

8. Procédé selon l'une des revendications 1 à 7, **caractérisé en ce qu'**une authentification réciproque est réalisée entre l'équipement réseau (20) et chacune des sources d'information (30, 33, 35) connectées à ce dernier ainsi qu'entre l'équipement réseau (20 et chacun des terminaux (50, 60) connectés à ce dernier.

9. Procédé selon l'une des revendications 1 à 8, **caractérisé en ce que** les informations échangées entre l'équipement réseau (20) et les sources d'information (30, 33, 35) ainsi qu'entre l'équipement réseau (20 et les terminaux (50, 60) sont transmises codées.

10. Procédé selon l'une des revendications 1 à 9, **caractérisé en ce que** le réseau fixe (10) est un réseau numérique, et **en ce que** des informations brèves sont transmises par l'intermédiaire d'un canal de commande entre l'équipement réseau (20) et les sources d'information (30, 33, 35) ainsi qu'entre l'équipement réseau (20 et les terminaux (50, 60).

11. Procédé selon l'une des revendications 1 à 10, **caractérisé en ce que** l'ensemble des informations spécifiques à chacun des abonnés qui disposent d'une autorisation d'accès à l'équipement réseau (20) sont enregistrées dans l'équipement réseau (20), et **en ce que** l'équipement réseau (20) est apte à être programmé individuellement par abonné.

12. Réseau fixe pour la mise en oeuvre du procédé selon l'une des revendications 1 à 11 présentant les caractéristiques suivantes :
- plusieurs terminaux (50, 60) connectés côté abonné,
- au moins un équipement réseau central (20) et
- plusieurs sources d'information (30, 33, 35) aptes à être connectées à l'équipement réseau central (20) et fournissant des informations prédéterminées, l'équipement réseau (20) présentant les caractéristiques suivantes :
a) un premier dispositif de mémoire destiné à stocker les informations transmises par les sources d'information,
b) un dispositif de commande programmable destiné à déclencher, en réponse à un événement prédéterminé, un établissement de connexion au moins vers une source d'information (30, 33, 35), et à déclencher, en réponse à l'information transmise par les sources d'information, un établissement de connexion vers au moins un terminal (50, 60) du réseau fixe (10) ou d'un autre réseau de communication,
c) un dispositif de réception d'une information prédéterminée de la source d'information (30, 33, 35),
d) un dispositif de conversion de l'information à transmettre au au moins un terminal (50, 60) en un format apte à être traité par le terminal, et
e) un dispositif de transmission de l'information reçue vers le terminal (50, 60).

13. Réseau fixe selon la revendication 12, **caractérisé en ce que** l'équipement réseau (20) comprend en outre :
f) un deuxième dispositif de mémoire destiné à stocker des valeurs seuils affectées à des informations prédéterminées,
g) un dispositif de comparaison destiné à comparer l'information prédéterminée reçue d'une source d'information (30, 33, 35) avec la valeur seuil correspondante, le dispositif de commande déclenchant une procédure prédéterminée en réponse au résultat du dispositif de comparaison.
